(19) Europäisches Patentamt
European Patent Office
Office européen des brevets

(11) EP 2 593 489 B1

(12) EUROPEAN PATENT SPECIFICATION

(45) Date of publication and mention of the grant of the patent:
**25.01.2017 Bulletin 2017/04**

(21) Application number: **11807079.6**

(22) Date of filing: **15.07.2011**

(51) Int Cl.:
***C08F 210/16*** (2006.01) ***C08F 4/6592*** (2006.01)
***B29C 45/00*** (2006.01) ***C08J 5/18*** (2006.01)

(86) International application number:
**PCT/KR2011/005227**

(87) International publication number:
**WO 2012/008794 (19.01.2012 Gazette 2012/03)**

(54) **ETHYLENE COPOLYMER WITH IMPROVED ELASTICITY AND PROCESSIBILITY**

ETHYLEN-COPOLYMER MIT VERBESSERTER ELASTIZITÄT UND VERARBEITBARKEIT

COPOLYMÈRE DE L'ÉTHYLÈNE AYANT UNE ÉLASTICITÉ AMÉLIORÉE ET UNE APTITUDE AMÉLIORÉE À LA MISE EN UVRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2010 KR 20100068383**

(43) Date of publication of application:
**22.05.2013 Bulletin 2013/21**

(73) Proprietor: **SABIC SK Nexlene Company Pte. Ltd.**
**Singapore 018989 (SG)**

(72) Inventors:
- **KWON, Seung Bum**
**Seoul 135-282 (KR)**
- **HAM, Hyeong Taek**
**Seoul 135-090 (KR)**
- **CHAE, Sung Seok**
**Daejeon 305-509 (KR)**
- **OH, Se Won**
**Seoul 135-280 (KR)**
- **JUNG, Hyun Wook**
**Seoul 136-701 (KR)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(56) References cited:
**KR-A- 20070 104 845** **KR-A- 20100 031 461**
**US-A1- 2010 113 720** **US-B2- 6 787 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an ethylene copolymer, and more particularly, to an ethylene copolymer with improved elasticity and processibility without reducing impact resistance and stiffness.

### Background Art

A polyethylene resin has mechanical properties affected by its molecular weight and molecular weight distribution thereof, and thus, it is applied in various different fields. Generally, the higher the molecular weight of polyethylene resin, the better it leads to mechanical properties thereof; however, polyethylene with high molecular weight has low fluidity, which causes difficulty in the processing procedure. This may be a serious disadvantage in extrusion or injection molding, which requires rapid deformation at a high shear rate.

Therefore, studies have continued on methods for improving workability of products by copolymerization of ethylene with α-olefins, such as 1-butene, 1-pentene, 1-hexene and 1-octene, while maintaining the mechanical properties of polyethylene products, such as impact strength and the like. Especially, the market requires a great deal of products having both excellent processibility and excellent impact resistance. The processibility is generally improved by controlling a weight average molecular weight ($M_w$) to be low or down-controlling a molecular weight distribution represented by a ratio of a weight average molecular weight ($M_w$) and a number average molecular weight ($M_n$), (i.e., $M_w/M_n$). This results in improved processibility but with deteriorated impact resistance. When copolymerization of ethylene with α-olefin having a relatively low density is carried out in order to prevent the deterioration in impact resistance, rigidity of products is decreased even though the impact resistance can be maintained at an equal level. The decrease in rigidity of products intended for lighter and thinner ones may cause deformation when they are bent or stacked.

For this reason, Korean Patent Registration No. 0262024 has proposed an olefin copolymer characterized in that the olefin polymer is a substantially linear olefin polymer having: a) a melt flow ratio ($I_{10}/I_2$) of 5.63 or more, b) a molecular weight distribution ($M_w/M_n$), defined by the equation: $M_w/M_n < (I_{10}/I_2) - 4.63$, and c) a critical shear rate at onset of surface melt fracture 50% or more greater than the critical shear rate at the onset of surface melt fracture of a linear olefin polymer having about the same $I_2$ and $M_w/M_n$.

Further relevant prior art comprises the documents US 2010/113720A1 and KR 10 2010 031 461 A.

### Disclosure of Invention

### Technical Problem

An object of the present invention is to provide an ethylene copolymer with improved elasticity and processibility without reducing impact resistance and stiffness as compared with the existing ethylene copolymer having the same molecular weight distribution, melt index, and density.

Another object of the present invention is to determine a rheological characteristic of an ethylene copolymer with improved elasticity and processibility, thereby providing a correlation thereof with improvement in the processibility and applications thereof.

### Solution to Problem

The present invention provides an ethylene copolymer obtained by polymerization of ethylene and a (C3-C18) α-olefin comonomer, wherein the ethylene copolymer has an activation energy of 40 kJ/mol or more and a molecular weight distribution (Mw/Mn) of 2.4 or more, and satisfies equations 1 and 2 below at a section where an oscillatory torque (μN.m) is 60 to 6,000μN.m.

[Equation 1]

$$P \leq 168.8 - 97.4 \times t + 32.2 \times t^2 - 4.0 \times t^3$$

[Equation 2]

$$P \geq 204.3 - 157.7 \times t + 58.0 \times t^2 - 7.5 \times t^3$$

[In the equations 1 and 2 above, t is an oscillatory torque (μN.m) and P is a phase angle (°).]

Hereinafter, the present invention will be described in more detail.

Meanwhile, unless technical terms used herein are defined otherwise, they have meanings understood by those skilled in the art to which the present invention pertains. Unnecessary description about known functions and components that may obscure the gist of the present invention will be omitted.

Equations 1 and 2 above represent the relationship between oscillatory torque, t, and phase angle, P, of an ethylene copolymer with improved impact resistance and high elasticity and rigidity at a section where an oscillatory torque is 60 to 6,000μN.m in Van-Gurp Palmen analysis based on rheological characteristic (kinematic shear viscosity) analysis results.

The Van-Gurp Palmen analysis, as described in [Van Gurp etc., Rheology Bulletin, Vol. 67, p.5-8(1998)], is a method of rheological analysis for directly comparing polymers having different chemical properties from each other. The Van-Gurp Palmen analysis compares the variation in phase angle according to the oscillatory torque or complex modulus by analyzing rheological characteristic under shear conditions. Herein, as the phase angle is smaller, the complex modulus also tends to be smaller. In a case of a general α-olefin copolymer, as the phase angle is increased to be closer to 90°, a flat region in which the complex modulus is constantly maintained is shown. Through this method, molecular weight distribution, polydispersity, degree of long chain branch, or the like can be confirmed.

An ethylene copolymer with improved elasticity and processibility according to the present invention deviates from general tendency of this linear α-olefin copolymer, and higher elasticity and superior processibility of the ethylene copolymer leads to large deviation from this tendency.

Examples according to the present invention exhibit different behaviors from comparative examples in respect to the variation in phase angle according to the change of oscillatory torque, and satisfy the equations 1 and 2 above.

Since the ethylene copolymer of the present invention satisfying the equations 1 and 2 above exhibits excellent processibility and elasticity without deterioration of impact resistance and rigidity, as compared with a general α-olefin copolymer, it is applicable in products intended for lighter and thinner ones.

The present invention provides an ethylene copolymer by polymerization of ethylene and a (C3-C18) α-olefin comonomer. The (C3-C18) α-olefin comonomer may be one or more selected from propylene, 1-butene, 1-pentene, 4-methyl1-pentene, 1-hexene, 1-octene, 1-decene, 1-dodecene, and a mixture thereof. Using α-olefin comonomer gives fluidity to ethylene homopolymer and allows for preparation of an ethylene copolymer with high molecular weight, thereby improving mechanical properties thereof, such as impact resistance. The content of α-olefin included in 100% by weight of ethylene copolymer of the present invention is 1 to 40% by weight, preferably 1 to 30% by weight, and more preferably 1 to 20% by weight. When the content of α-olefin is less than 1% by weight, the ethylene copolymer has increased rigidity but decreased impact resistance, and thus it is difficult to be used in films, compounds, sheets, pipes, or blow molding products requiring impact resistance. When the content of α-olefin is more than 20% by weight, the ethylene copolymer has increased impact resistance but decreased rigidity, and thus it is difficult to be applied alone to molded products such as films, compounds, sheets, pipes, or blow molding products.

The ethylene copolymer has a melt index of 0.5 to 20g/10min, preferably 0.5 to 10g/10min, more preferably 0.5 to 5g/10min. When the melt index is less than 0.5g/10min, the molecular weight distribution is not broad, and thus advantages of a multistage reaction are not shown. When the melt index is more than 20g/10min, physical properties are deteriorated due to a low molecular weight.

The present invention provides an ethylene copolymer having activation energy (Ea) of 40kJ/mol or more, preferably 40 to 100 kJ/mol.

When the activation energy is less than 40kJ/mol, bubble characteristics become nonuniform to cause deterioration in the external appearance. Therefore, in terms of improving the bubble characteristics, activation energy of 40kJ/mol or more, preferably 40 to 100 kJ/mol, is preferable in smoothening a surface of a pressure-foamed molding.

The ethylene copolymer has a molecular weight distribution ($M_w/M_n$) of 2.4 or more, preferably 2.4 to 30.

A case where the molecular weight distribution is less than 2.4 does not have a significant difference as compared with a case where a single reactor and a single site catalyst are used, and does not have effects of controlling density and molecular weight distribution, which causes a decrease in the improvement of processibility and physical properties.

Also, the present invention provides an ethylene copolymer having a phase angle (P) satisfying a relationship with an oscillatory torque (t) in the equations 1 and 2 below.

[Equation 1]

$$P \leq 168.8 - 97.4 \times t + 32.2 \times t^2 - 4.0 \times t^3$$

[Equation 2]

$$P \geq 204.3 - 157.7 \times t + 58.0 \times t^2 - 7.5 \times t^3$$

[In the equations 1 and 2 above, t is an oscillatory torque (μN.m) and P is a phase angle (°).]

Further, the present invention provides an ethylene copolymer having a Haze value of 2 to 16. The Haze value is also an important factor for the characteristics of the products at the time of application to films or moldings. A high-rigidity ethylene copolymer prepared by a conventional Ziegler-Natta catalyst exhibits a high Haze value, and thus a low transmittance of visible rays, thereby having difficulty in preparing transparent products. The ethylene copolymer of the present invention has a low Haze value and a high transparency, thereby obtaining a high-rigidity product with excellent impact resistance.

As for an ethylene copolymer according to the present invention, an extractable substance content determined by measurement of volatiles is not present, or preferably 3.0% by weight or less, more preferably 0.1 to 2.0% by weight. The measurement of volatiles can be determined from the data obtained from a temperature rising elution fractionation analysis, and can be measured by a proportion of a soluble fraction peak generated by elution at 35°C for 10 minutes to the overall crystallization peak. The extractable substance content may be preferably 3.0% by weight or less, since the residual material extracted after copolymerization may cause deterioration in physical properties of the ethylene copolymer, including impact resistance.

When the ethylene copolymer satisfying the above requirements is applied to a film, the present invention may be included in a mono-layered film, or in one or more layers of a multi-layered film.

Also, the present invention may be applicable to any field to which ethylene copolymers can be used, in addition to the film. For example, the present invention is also applicable to injection molding products containing the ethylene copolymer thereof, and compound products, sheets, pipes and blow moldings using the same, but a use thereof is not limited thereto.

The ethylene copolymer of the present invention is prepared by performing a method including (a) preparing a first copolymer having a density of 0.860 to 0.940 g/ $cm^3$ and a melt index (MI) of 0.001 to 2.0 g/10min; and (b) preparing the ethylene copolymer having a density of 0.910 ~ 0.960 g/$cm^3$ and a melt index (MI) of 0.5 ~ 20 g/10min by using the first copolymer.

The final ethylene copolymer prepared by the above preparing method has a density of 0.910 to 0.960g/$cm^3$, advantageously 0.910 to 0.930g/$cm^3$. The density is a factor that determines a mechanical strength of the ethylene copolymer, including impact resistance. An ethylene copolymer retaining the density of the above range is advantageously used in films, compounds, sheets, pipes, or blow molding products requiring impact resistance.

1. Catalyst composition

The catalyst composition is used in the above stages (a) and (b) includes bis-(2-phenylphenoxy) (pentamethyl cyclopentadienyl) titanium (1V) chloride.

The catalyst composition may further include a cocatalyst, which may be selected from a boron compound, an aluminum compound, or a mixture thereof.

The boron compound usable as the cocatalyst in the present invention may be selected from compounds represented by chemical formula 2, 3, or 4 below, as shown in US Patent No. 5,198,401.

[Chemical formula 2] $B(R^{31})_3$

[Chemical formula 3] $[R^{32}]^+[B(R^{31})_4]^-$

[Chemical formula 4] $[(R^{33})_qZH]^+[B(R^{31})_4]^-$

[In chemical formulas 2 to 4, B is a boron atom; $R^{31}$ is phenyl or phenyloxy, which may be further substituted with three to five substituents selected from a fluorine atom, (C1-C20)alkyl with or without fluorine substituent(s), or (C1-C20)alkoxy with or without fluorine substituent(s); $R^{32}$ is (C5-C7)cycloalkyl radical, (C1-C20)alkyl(C6-C20)aryl radical, or (C6-C30)ar(C1-C20)alkyl radical, such as triphenylmethyl radical; Z is nitrogen or phosphorus atom; $R^{33}$ is (C1-C20)alkyl radical or anilinium radical which is substituted with two (C1-C4)alkyl group together with nitrogen atom; and q is an integer of 2 or 3.]

A molar ratio of core metal M: boron atom is preferably 1:0.1 to 50, more preferably 1:0.5 to 15.

The aluminum compound usable in the present invention may include an aluminoxane compound represented by chemical formula 5 or 6 below, an organo-aluminum compound represented by chemical formula 7 below, and an

organo-aluminum hydrocarbyloxide compound represented by chemical formula 8 or 9 below.

[Chemical formula 5] $(-Al(R^{41})-O-)_m$

[Chemical formula 6] $(R^{41})_2Al-(-O(R^{41})-)_p-(R^{41})_2$

[Chemical formula 7] $(R^{42})_rAl(E)_{3-r}$

[Chemical formula 8] $(R^{43})_2AlOR^{44}$

[Chemical formula 9] $R^{43}Al(OR^{44})_2$

[In chemical formulas 5 to 9, $R^{41}$, $R^{42}$ and $R^{43}$ each are independently linear or nonlinear (C1-C20)alkyl; m and p each are independently an integer of 5 to 20; E is a hydrogen atom or a halogen atom; r is an integer of 1 to 3; and $R^{44}$ may be selected from (C1-C20)alkyl or (C6-C30)aryl.

Further, the molar ratio of the core metal M: aluminum atom is preferably 1:1 to 1:2,000, more preferably 1:5 to 1:1,000.

Further, the molar ratio of the core metal M: boron atom: aluminum atom is preferably 1:0.1 to 50:1 to 1,000, more preferably 1:0.5 to 15:5 to 500.

2. Solution polymerization process

A polymerization process for the ethylene copolymer of the present invention is performed in two or more stages, and thus requires two or more reactors. Therefore, two or three polymerization stages are performed to attain a broad molecular weight distribution. The present invention provides a method for preparing an ethylene copolymer, which includes (a) polymerizing a first polymer by polymerization of ethylene and one or more (C3-C18) $\alpha$-olefin comonomers in the presence of a catalyst composition containing a transition metal catalyst of chemical formula 1 shown in the above catalyst in at lease one reactor; and (b) passing the first copolymer prepared from stage (a) through at least one other reactor, which contains the ethylene or ethylene and one or more (C3-C18) $\alpha$-olefin comonomers at a temperature higher than the reaction temperature of stage (a) in the presence of the same catalyst composition as used in stage (a), to prepare a high-temperature ethylene polymer containing ethylene and a (C3-C18) $\alpha$-olefin comonomer composition.

In addition, the present invention provides a method for preparing an ethylene copolymer, which includes (a) polymerizing a first copolymer by polymerization of ethylene and one or more (C3-C18) $\alpha$-olefin comonomers in the presence of a catalyst composition containing a transition metal catalyst of chemical formula 1 in at least one reactor; (b) preparing a second polymer by reaction of the ethylene or ethylene and one or more (C3-C18) $\alpha$-olefin comonomers at a temperature higher than the reaction temperature of stage (a) in the presence of the same catalyst composition as used in stage (a) in at least one other reactors; and (c) mixing the first copolymer with the second copolymer.

Furthermore, the present invention is characterized in that the ethylene copolymer may be prepared at a reaction temperature of 80 to 210°C for stage (a) and 90 to 220°C for stage (b), under a pressure of 20 to 500 atm for each stage.

In stage (a), polymerization may be performed in the presence of the catalyst or catalyst composition, at a temperature of 80 to 210°C, more preferably 80 to 150°C under a pressure of 20 to 500 atm, more preferably 30 to 200 atm. When the reaction temperature is lower than 80°C, it is difficult to produce a polymer since the reaction does not occur due to precipitation or insufficient dispersion of the reactants. When the reaction temperature is higher than 210°C, it is impossible to prepare a polymer having a predetermined molecular weight. In addition, when the pressure deviates from the above range, it is difficult to prepare a polymer having a required molecular weight.

Thereafter, in stage (b), polymerization is performed, like in stage (a), in the presence of the same catalyst or catalyst composition as used in stage (a) at a temperature of 90 to 220°C, more preferably 120 to 200°C, under the same pressure as that in stage (a). When the temperature is lower than 90°C, polymers may be precipitated or polymers similar to those obtained from stage (a) may be prepared, and thus, multistage polymerization is not effective. When the temperature is higher than 220°C, the polymer has a molecular weight that is too low, thereby deteriorating physical properties of the polymer. In addition, the pressure may have the same range as that in stage (a) due to the same reason as that in stage (a).

On the other hand, the present invention attempts to control physical properties of an ethylene copolymer having a uniform molecular weight and a multimodal density distribution by differently setting process conditions of stages (a) and (b), such as an amount of ethylene, an amount of hydrogen, a conversion rate, and the like. Especially, the present invention attempts to improve the physical properties of the final resin, such as tensile strength and impact strength by preparing a predetermined ratio of high-molecular and low-density polymer in stage (a) to optimize tie

molecules in the molecular structure thereof. The present invention attempts to prepare an ethylene copolymer having a different-range molecular weight and a different-range density from the polymer prepared in stage (a), by, in stage (b), using the same catalyst or catalyst composition as used in stage (a) to prepare performing polymerization at a higher temperature than stage (a). Although the resulting polymer has little choice but to exhibit narrow molecular weight distribution and density distribution due to the nature of the transition metal catalyst of the invention, broad molecular weight and density distribution as desired by the manufacturer can be achieved through the multistage reaction.

In the multistage reaction, the reactors may be arranged in series or in parallel.

Figure 1 is a schematic view of a serial arrangement of reactors according to one exemplary embodiment of the present invention. Referring to Figure 1, serial arrangement of reactors of the present invention include a first-stage feed pump 11, a first-stage feed cooler 12, a first-stage reactor feed heater 13, a first-stage low-temperature reactor 14, a first-stage low-temperature reactor catalyst feed 15, a second-stage high-temperature reactor 16 connected in series, a second-stage high-temperature reactor catalyst feed 17, a second-stage reactor feed pump 18, a second-stage feed cooler 19, a second-stage feed heater 20, a second-stage reactor feed 21, and a hydrogen feed 22.

Therefore, according to a serial reaction of the present invention, reactants except a catalyst are fed into the first-stage low-temperature reactor 14 with a temperature regulator consisting of the first-stage reactor feed cooler 12 and the first-stage reactor feed heater 13, through the first-stage reactor feed pump 11, and the catalyst is fed thereinto through the first-stage low-temperature reactor catalyst feed 15. Then, stage (a) is performed at a lower temperature than the second-stage high-temperature reactor.

The polymer passing through stage (a) is directly fed into the second-stage high-temperature reactor 16 connected in series with the second-stage reactor feed cooler 19 and the second-stage reactor feed heater 20, and a catalyst is fed thereinto through the second-stage high-temperature reactor catalyst feed 17. Then, feeding a reactant through the second-stage reactor feed 21 and hydrogen through the hydrogen feed 22 is carried out by the second-stage reactor feed pump 18, and then polymerization of stage (b) is performed at a higher temperature than in stage (a). In a case of the serial arrangement of reactors, overall reactor system needs to be designed and controlled, considering the conversion rate of ethylene, activity of catalyst, and the like in the first-stage reaction.

Figure 2 is a schematic view of parallel arrangement of reactors according to another exemplary embodiment of the present invention. Referring to Figure 2, the parallel arrangement of reactors of the present invention include a low-temperature reactor feed pump 31, a high-temperature reactor feed pump 32, a low-temperature reactor feed cooler 33, a low-temperature reactor feed heater 34, a high-temperature reactor feed cooler 35, a high-temperature reactor feed heater 36, a low-temperature reactor 37, a low-temperature reactor catalyst feed 38, a high-temperature reactor catalyst feed 39, a high-temperature reactor 40, an inline mixer 41, a high-temperature reactor feed 42, and a hydrogen feed 43.

Therefore, according to a parallel reaction of the present invention, reactants except a catalyst are fed into the low-temperature reactor 37, in which temperature is regulated by the low-temperature feed cooler 33 and the low-temperature feed heater 34, through the low-temperature reactor feed pump 31, followed by addition of catalyst through a low-temperature reactor catalyst feed 38, and then reaction by stage (a) is performed. Separately from but simultaneously with stage (a), reactants except a catalyst are fed into the high-temperature reactor 40, in which temperature is regulated by the high-temperature feed cooler 35 and the high-temperature feed heater 36, through the low-temperature reactor feed 42, while adding hydrogen into the high-temperature reactor 40 through the hydrogen feed 43, followed by addition of catalyst through the high-temperature reactor catalyst feed 39, and then reaction by stage (b) is performed at a higher temperature than stage (a). The low-temperature and high-temperature reactants are mixed using the inline-mixer 41, to prepare a homogeneous copolymer. In a case of the parallel arrangement of reactors, the inline mixer is used to homogeneously mix solutions from respective reactors in order to obtain uniform physical properties of the copolymer. A stirring baths and the like as well as the inline mixer for possible unit operations may be used in order to prepare a homogeneous copolymer.

In stages (a) and (b) of the present invention, ethylene and one or more (C3-C18) $\alpha$-olefin comonomers preferably contain 60 to 99% by weight of ethylene and 1 to 40% by weight of $\alpha$-olefin comonomers, respectively. When the ethylene content is lower than 60%, characteristics of ethylene are little exhibited due to the low content of ethylene, resulting in deterioration in physical properties of ethylene. When the ethylene content is higher than 99% by weight, effects of the copolymer are decreased.

Also, in stages (a) and (b), the (C3-C18) $\alpha$-olefin comonomer may be selected from propylene, 1-butene, 1-pentene, 4-methyl-1-pentene, 1-hexene, 1-octene, 1-decene, 1-dodecene, and a mixture thereof. Among them, 1-butene, 1-hexene, 1-octene or 1-decene are more preferably used.

Also, in stages (a) and (b), an organic solvent used in polymerization is preferably (C3-C20) hydrocarbon. Specific examples of the organic solvent may include butane, isobutane, pentane, hexane, heptane, octane, isooctane, nonane, decane, dodecane, cyclohexane, methylcyclohexane, benzene, toluene, xylene, and the like.

An ethylene copolymer prepared by a preparing method of the present invention is characterized in that it contains 10 to 70% by weight of the polymer prepared in stage (a) and 30 to 90% by weight of the polymer prepared in

stage (b); and the polymer prepared in stage (a) has an MI of 0.001 to 2.0 g/10 min and a density of 0.860 to 0.940 g/cm$^3$, and the polymer prepared in stage (b) has an MI of 0.5 to 20.0 g/10 min and a density of 0.910 to 0.960 g/cm$^3$.

Above all, the polymer prepared in stage (a) is contained in an amount of 10 to 70% by weight, preferably 20 to 60% by weight. When a content of the polymer prepared in stage (a) is less than 10% by weight, there is little improvement in impact strength. When the content of the polymer is more than 70% by weight, a film manufactured by the polymer has remarkably deteriorated transparency, such that high energy for processing is required and productivity is lowered.

In addition, a molecular weight of the polymer prepared in stage (a), according to MI (melt index) measurement based on ASTM D2839, is an MI of 0.001 to 2.0 g/10 min, more preferably 0.003 to 1.0 g/10 min. When MI of the polymer prepared in stage (a) is less than 0.001 g/10 min, the polymer becomes too stiff, resulting in poor processibility. When it is higher than 2.0 g/10 min, remarkable improvement in overall physical properties of the polymer, such as tensile strength, impact strength, and the like, is not shown. Furthermore, a density of the polymer prepared in stage (a) is 0.860 to 0.940 g/cm$^3$, more preferably 0.880 to 0.915 g/cm$^3$. When the density of the polymer is lower than 0.860 g/cm$^3$, it is anticipated that a film manufactured by the polymer may have poor physical properties. When it is higher than 0.940 g/cm$^3$, the film becomes too stiff. The polymer prepared in stage (a) may be a resin having a low density range, and this is for improving the physical properties of the finally prepared resin by synthesizing a resin having a uniform monomer distribution for copolymerization in the polymer chain, by using a transition metal catalyst with a single activation point, differently from a Ziegler-Natta catalyst which shows nonuniform copolymer distribution in the polymer chain.

Meanwhile, the polymer prepared in stage (b) is contained in an amount of 30 to 90% by weight, more preferably 40 to 80% by weight. When a content of the polymer prepared in stage (b) is less than 30% by weight, processibility of the final resin and transparency of the film become deteriorated because of the high-molecular weight and lowdensity ethylene copolymer prepared in stage (a). When the content of the polymer prepared in stage (b) is more than 90% by weight, the polymer prepared in stage (a) has a lowered content, thereby decreasing environmental resistance of the resin and deteriorating physical properties of the resin, such as impact strength, tensile strength, and the like.

In addition, a molecular weight of the polymer prepared in stage (b), according to MI (melt index) measurement based on ASTM D2839, is an MI of 0.5 to 20.0 g/10min, more preferably 0.5 to 10.0 g/10 min. When the polymer prepared in stage (b) has an MI of less than 0.5 g/10 min, it overlaps the polymer prepared in stage (a) in a molecular weight range, and thus, a molecular weight distribution thereof is not broad. Therefore, advantages of a multistage reaction are not shown. When the polymer prepared in stage (b) has an MI of more than 20 g/10 min, physical properties thereof are deteriorated due to the low molecular weight.

In addition, the polymer produced in stage (b) preferably has a density of 0.910 to 0.960 g/cm$^3$. When the density thereof is less than 0.910 g/cm$^3$, the density thereof is included in the density range of the polymer prepared in stage (a), and thus, polymerization by stages is not effective. When the density thereof is more than 0.960 g/cm $^3$, a film manufactured by the polymer is too stiff. Therefore, density ranges of the polymer prepared in stage (a) and the polymer prepared in stage (b) are regulated to establish a density range at which physical properties of the resin are optimized.

Besides, the ethylene copolymer prepared by the method of the present invention may include a linear lowdensity polyethylene copolymer (LLDPE) having a density of 0.910 to 0.940 g/cm$^3$, and a very or ultra lowdensity ethylene copolymer (VLDPE or ULDPE) having a density of 0.910 to 0.920 g/cm$^3$.

The ethylene copolymer prepared according to the above method has a molecular weight distribution index (Mw/Mn) of 2.4 or more, preferably 2.4 to 30.

An ethylene copolymer of the present invention is designed to have a broad molecular weight distribution, such as at least bimodal molecular weight distribution, capable of improving the processibility, from a narrow molecular weight distribution which is the characteristic of ethylene copolymer by a conventional single activation point catalyst, by using the above multistage reaction process.

For this reason, an ethylene copolymer prepared by using the process and catalyst according to the invention is controlled to have a molecular weight distribution index (weight average molecular weight divided by number average molecular weight) of 2.4 or more, preferably 2.4 to 30, thereby improving both processibility and physical properties thereof.

Therefore, the ethylene copolymer prepared through stages (a) and (b) preferably has a molecular weight distribution index of 2.3 to 30. When the molecular weight distribution index is less than 2.4, there is no significant difference as compared with the case of using a single reactor and a single activation point catalyst, and thus, effects of controlling the density and molecular weight distribution are not effective, thereby deteriorating the improvement of the processibility or physical properties.

According to the present invention, ethylene and (C3-C18) $\alpha$-olefin comonomer fed in stages (a) and (b) are dissolved in solvent before they are fed into the reactor. Before ethylene and comonomer are mixed with and dissolved in the solvent, ethylene, comonomer and solvent are subjected to a purification process to remove moisture, oxygen, carbon monoxide and other metallic impurities, which may act as potential poisons to the catalyst. Substances used in this purification process may include molecular sieves, activated aluminum, silica gel, or the like, as known in the art.

Also, raw materials fed in stages (a) and (b) are cooled or heated through a heat exchange process before they are fed, and a temperature inside the reactor is controlled through this process. Therefore, temperature control of the reactor is an adiabatic reactor process without heat exchange through the reactor wall, and control of reaction heat changes the temperature of solvent and a monomer stream which flow into the reactor, thereby controlling the temperature inside the reactor.

According to the present invention, ethylene, comonomer, catalyst, solvent, and the like may be further fed before stage (b), and they are controlled to have predetermined temperatures through heat exchange. In general, the catalyst is fed separately from other raw materials when it is fed at each stage. Here, the catalyst is preferably prepared while it is previously mixed with or dissolved in the solvent.

On the other hand, when a polymer is synthesized through multistage reaction, molecular weight and density of the polymer for each stage can be calculated and determined by sampling the resin after stage (a) and analyzing the sampled resin in order to measure physical properties of the polymer prepared in stage (b) or a further stage, and by analyzing the physical properties of the finally produced polymer after stage (b).

In addition, in measurement of physical properties, they can be analogized from physical properties of the polymers produced by reactions of respective stages (a) and (b) in a single reactor under the same polymerization conditions, such as the same reaction temperature, pressure, solvent, reactants, catalyst and reaction time. Alternatively, they can be analyzed by calculating values thereof for respective stages (a) and (b) in the multistage reaction, as disclosed in B. Hagsroem Conference on Polymer Processing, 1977.

Meanwhile, the residence time in each of stages (a) and (b) is determined by the designed volume and the output per time for each stage. Appropriate stirring is performed in stages (a) and (b) to maintain operation conditions so that the substances are homogeneous. The finally prepared ethylene polymer or ethylene copolymer is recovered through an appropriate solvent removal process.

Therefore, ethylene copolymer moldings used as injection molding products, such as a mono-layered film, a multi-layered film, a compound product, a sheet product, a pipe product, or a blow molding product, can be obtained by using the ethylene copolymer prepared through stages (a) and (b) or stages (a) to (c).

Especially, the present invention can be molded into a blow film and a casting film to manufacture a mono-layered or a multi-layered packaging film, and can be applied to various uses such as a shrinkage film, a heavy weight packaging film, a frozen packing film, an automatic packaging film, a stretch wrap, a bag, and the like.

## Advantageous Effects of Invention

The present invention can prepare an ethylene copolymer having a multi-modal molecular weight distribution through multistage synthesis of ethylene and α-olefin, thereby improving both elasticity and processibility without deteriorating impact resistance and rigidity of the ethylene copolymer.

In addition, the present invention can prepare an ethylene copolymer with excellent mechanical properties, such as impact resistance, flexural modulus, and the like, by controlling the density of the polyethylene resin, and the present invention can be applied to various uses such as a film, a compound product, a sheet product, a pipe product, a blow molding product, and the like, by controlling the physical properties of the ethylene copolymer.

## Brief Description of Drawings

The above and other objects, features and advantages of the present invention will become apparent from the following description of exemplary embodiments given in conjunction with the accompanying drawings, in which:

Figure 1 is a schematic view of serial arrangement of reactors according to one exemplary embodiment of the present invention;
Figure 2 is a schematic view of parallel arrangement of reactors according to another exemplary embodiment of the present invention; and
Figure 3 is a schematic view of Van-Gurp Palmen analysis of another exemplary embodiment of the present invention.

[Detailed description of Main Elements]

11: first-stage feed pump 12: first-stage feed cooler
13: first-stage reactor feed heater 14: first-stage low-temperature reactor
15: first-stage low-temperature reactor catalyst feed 16: serial type second-stage high-temperature reactor
17: second-stage high-temperature reactor catalyst feed 18: second-stage reactor feed pump

19: second-stage reactor feed cooler 20: second-stage reactor feed heater
21: second-stage reactor feed 22: hydrogen feed
31: low-temperature reactor feed pump 32: high-temperature reactor feed pump
33: low-temperature reactor feed cooler 34: low-temperature reactor feed heater
35: high-temperature reactor feed cooler 36: high-temperature reactor feed heater
37: low-temperature reactor 38: low-temperature reactor catalyst feed
39: high-temperature reactor catalyst feed 40: high-temperature reactor
41: inline mixer 42: high-temperature reactor feed
43: hydrogen feed

**Best Mode for Carrying out the Invention**

Hereinafter, the present invention will be described in detail with reference to the following examples, which are only for illustrating the present invention but not intended to limit the protective scope of the invention.

Unless described otherwise, all experiments for synthesizing ligands and catalysts were performed under a nitrogen atmosphere by using standard Schlenk or glove-box techniques. An organic solvent in the reaction was refluxed in the presence of sodium metal and benzophenones to remove moisture, and then distilled directly before use. $^1$H-NMR analysis of the synthesized ligands and catalysts was performed by using Varian Mercury 300 MHz Spectrometer at room temperature.

Cyclohexane, which is a polymerizing solvent, was used after it is passed through a tube filled with Q-5 catalyst (BASF Inc.), silica gel, and activated alumina, sequentially, and then bubbled by high-purity nitrogen to sufficiently remove moisture, oxygen and other catalyst poison.

The polymerized polymer was used to produce a film processed by a blow film molding machine and produce a sheet by compression molding machine. The processed film and compressed sheets are analyzed according to the methods described below.

1. Melt index (MI)

MI was measured according to ASTM D 1238.

2. Density

Density was measured by using a density gradient tube, according to ASTM D 1505.

3. Analysis of melting temperature (Tm)

Tm was measured by using Dupont DSC2910, under secondary heating conditions, at a nitrogen atmosphere at a rate of 10°C/min.

4. Molecular weight and molecular weight distribution

Molecular weight was measured by using PL210 gel chromatography (GPC) with PL Mixed-BX2+preCol, at 135°C, in the presence of 1,2,3-trichlorobenzene solvent, at a rate of 1.0 mL/min, and the molecular weight was calibrated by using PL polystyrene reference materials.

5. Kinematic shear viscosity of polymer

Kinematic shear viscosity was measured by using Advanced Rheometric Expansion System (ARES) from TA Instruments at 150°C under a nitrogen atmosphere at a deformation rate of 15%, and in a frequency range of 0.1 to 500 rad/s. Parallel plates having a diameter of 25mm were positioned in parallel with each other at an interval of 1.5 to 2 mm, at the time of measurement.

6. Activation energy for flow

Activation energy for flow (Ea) was calculated from a Kinematic viscosity-angular rate curve obtained by performing measurement using Advanced Rheometric Expansion System (ARES) from TA Instruments at 130°C, 150°C, 170°C and 190°C under a nitrogen atmosphere at a deformation rate of 15%, and in a frequency range of 0.1 to 100 rad/s. Parallel plates having a diameter of 25mm were positioned in parallel with each other at an interval of 1.5 to 2

mm, at the time of measurement.

7. Tensile strength

Tensile strength was measured according to ASTM D638.

8. Falling dart impact strength

Falling dart impact strength was measured according to ASTM D1709.

9. Haze

Haze was measured according to ASTM D1003.

10. Elmendorf tear strength

Elmendorf tear strength was measured according to ASTM D 1922.

11. Content of extractable material

The content of extractable material may be determined from data obtained from analysis of temperature rising elution fractionation according to measurement of soluble fraction, and determined by a proportion of the soluble fraction peak generated by elution at 35°C for 10 minutes to overall crystallization peak.

**Preparation example 1**

Synthesis of bis(2-phenylphenoxy)pentamethylcyclopentadienyl)titanium(IV) chloride

2-Phenylphenol (1.72 g, 10.1 mmol, Aldrich 99%) was fed into a dried flask and dissolved in 40mL of toluene, and then cooled to 0°C while well stirring. The resulting mixture was slow added dropwise to N-butyl lithium (4.8mL, 2.5M hexane solution, Aldrich). After adding dropwise was finished, the temperature of the resulting mixture was maintained for 1 hour and then raised to room temperature, followed by stirring for 12 hours. The temperature of the resulting mixture is decreased to 0°C, and then a solution of pentamethylcyclopentadienyltitanium trichloride (1.64 g, 5.5 mmol) dissolved in 10 mL of toluene was slowly added dropwise thereto. After adding dropwise was finished, the temperature of the resulting mixture was maintained for 1 hour and then raised to room temperature, followed by stirring for 1 hour. The temperature of a reactor was raised to 90°C, followed by reaction for 12 hours. The mixture thus obtained was filtered, followed by the removal of volatiles. The resulting material was subjected to recrystallization at -35°C by using a toluene/hexane mixed solution, to obtain an orange solid (2.3g).

yield: 75 %, $^1$H-NMR ($C_6D_6$) $\delta$= 1.54 (s, 15H), 6.74-7.16 (m, 9H) ppm
Mass (APCI mode, m/z): 558

Experiments related to all examples were performed by using a continuous solution polymerization process to be described below.

Examples 1 to 6

Bis(2-phenylphenoxy)(pentamethylcyclopentadienyl)titanium (IV) chloride synthesized in the preparation example 1 was used as a single activation point catalyst, that is, a transition metal catalyst, in the second stage reactor connected in serial. The usage amounts of catalyst are shown in Table 1. Ti represents a single activation point catalyst, and as a cocatalyst, Al represents triisobutylaluminum and B represents triphenylmethyliniumtetrakispentafluorophenyl borate. Respective catalysts were dissolved in xylene at a concentration of 0.2 g/L, 5.0 g/L or 1.5 g/L, respectively, followed by injection. Synthesis was performed by setting an ethylene feed ratio to 4:6 and using 1-octene or 1-butene as a comonomer for each reactor. However, the amount of ethylene to be fed into the second stage reactor was determined considering the amount of unreacted ethylene flowing into the second stage reactor when the conversion rate is low in order to adjust the polymer density and molecular weight in the first stage reactor. The conversion rate in each reactor can be estimated through reaction conditions when one type of polymer was polymerized under each reaction condition, and a temperature gradient in the reactor. An appropriate amount of hydrogen was injected to control the molecular

weight in order to produce copolymer having a relatively high MI in the second stage reactor. In addition, in the case of using the single activation point catalyst, the molecular weight in each reactor may be controlled by a function of the reactor temperature and 1-octene content or 1-butene content, and the conditions are shown in Table 1.

The final ethylene copolymers used in respective examples were prepared to have an MI of 0.6 to 1.4, such that they have the same molecular weight, if possible. The conditions for preparations were tabulated in Table 1. The prepared ethylene copolymer was molded into a sheet with a thickness of 2 mm under compression molding conditions, in which it is pre-heated at a molding temperature of 190°C under a pressure of 0.5 ton for 5 minutes, melted under a pressure of 15 tons for 1 minute, and then cooled under a pressure of 15 tons for 2 minutes in a mold having water-cooled conditions at room temperature, and then rheological characteristics thereof were analyzed. Then, the prepared ethylene copolymer was extruded at a barrel temperature of 160-170-170°C, and a die temperature of 175°C, to produce a blow film having a thickness of 40$\mu$m and a width of 530mm.

Comparative examples 1 to 3

Bis(2-phenylphenoxy)(pentamethylcyclopentadienyl)titanium (IV) chloride synthesized in the preparation example 1 was used as a single activation point catalyst in the first-stage reactor connected in series. The usage amounts of catalyst are shown in Table 1. Ti represents a single activation point catalyst, and as a cocatalyst, Al represents triisobutylaluminum and B represents triphenylmethyliniumtetrakispentafluorophenyl borate. Respective catalysts were dissolved in xylene at a concentration of 0.2 g/L, 5.0 g/L or 1.5 g/L, respectively, followed by injection. Synthesis was performed by setting an ethylene feed ratio to 4:6 and using 1-octene or 1-butene as a comonomer for each reactor. In a case of using a single activation point catalyst, the molecular weights of the final ethylene copolymers may be controlled by a function of the reactor temperature and 1-octene content or 1-butene content, and the conditions thereof are shown in Table 1. The copolymers were used to manufacture sheets and blow films through the same method as those in the examples.

Examples 7 to 14

Bis(2-phenylphenoxy)(pentamethylcyclopentadienyl)titanium (IV) chloride synthesized in the preparation example 1 was used as a single activation point catalyst in the second stage reactor connected in serial. The usage amounts of catalyst are shown in Table 2. Ti represents a single activation point catalyst, and as a cocatalyst, Al represents triisobutylaluminum and B represents triphenylmethyliniumtetrakispentafluorophenyl borate. Respective catalysts were dissolved in xylene at a concentration of 0.2 g/L, 5.0 g/L or 1.5 g/L, respectively. Synthesis was performed by setting an ethylene feed ratio to 3.5:6.5 to 4.5:5.5 and using 1-octene as a comonomer for each reactor. However, the amount of ethylene to be fed into the second stage reactor was determined considering the amount of unreacted ethylene flowing into the second stage reactor when the conversion rate is low in order to adjust the polymer density and molecular weight in the first stage reactor. The conversion rate in each reactor can be estimated through reaction conditions when one type of polymer was polymerized under each reaction condition, and a temperature gradient in the reactor. An appropriate amount of hydrogen was injected to control the molecular weight in order to produce copolymer having a relatively high MI in the second stage reactor. In addition, in the case of using the single activation point catalyst, the molecular weight in each reactor may be controlled by a function of the reactor temperature and 1-octene content, and the conditions are shown in Table 2.

The final ethylene copolymers used in respective examples were prepared to have an MI of 0.8 to 1.2, such that they have the same molecular weight, if possible. The conditions for preparations were tabulated in Table 1. The prepared ethylene copolymer was molded into a sheet with a thickness of 2 mm under compression molding conditions, in which it is pre-heated at a molding temperature of 190°C under a pressure of 0.5 ton for 5 minutes, melted under a pressure of 15 tons for 1 minute, and then cooled under a pressure of 15 tons for 2 minutes in a mold having water-cooled conditions at room temperature, and then rheological characteristics thereof were analyzed. Then, the prepared ethylene copolymer was extruded at a barrel temperature of 160-170-170°C, and a die temperature of 175°C, to produce a blow film having a thickness of 40$\mu$m and a width of 530mm.

Comparative example 4

As for copolymer with 1-butene having monomodal molecular weight distribution, which is FN400 Grade commercially available from SK Energy Inc., results of density, melt index (MI), and molecular weight thereof were tabulated in Table 3. The above copolymer was used to manufacture sheets and blow films through the same method as those in the examples.

Comparative examples 5 and 6

As for copolymer with 1-octene, which is metallocene linear lowdensity(LLD) polyethylene commercially available from the market, results of density, melt index (MI), and molecular weight thereof were tabulated in Table 3. The above copolymer was used to manufacture sheets and blow films through the same method as those in the examples.

Comparative examples 7 to 9

As for copolymer with 1-octene, which is metallocene polyolefin elastomer/ plastomer commercially available from the market, results of density, melt index (MI), and molecular weight thereof were tabulated in Table 3. The above copolymer was used to manufacture sheets and blow films through the same method as those in the examples.

Comparative example 10

As for copolymer with 1-octene having monomodal molecular weight distribution, which is FN810 Grade commercially available from SK Energy Inc., results of density, melt index (MI), and molecular weight thereof were tabulated in Table 3. The above copolymer was used to manufacture sheets and blow films through the same method as those in the examples.

Table 1

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Total flow of Solution(kg/h) | | 10 | 10 | 10 | 10 | 10 | 10 | 4.5 | 4.5 | 5 |
| Feedratio of Ethylene (1st stage:2nd stage) | | 4:6 | 4:6 | 4:6 | 4:6 | 4:6 | 4:6 | 10:0 | 10:0 | 10:0 |
| Feed Ratio Of 1-octene To Ethylene | 1st stage reactor | 0.28 | 0.28 | - | - | 0.24 | 0.25 | 0.50 | 0.90 | 0.70 |
| | 2nd stage reactor | 0.00 | 0.00 | - | - | 0.09 | 0.10 | - | - | - |
| Feed Ratio Of 1-butene To Ethylene | 1st stage reactor | - | - | 0.26 | 0.17 | - | - | - | - | - |
| | 2nd stage reactor | - | - | 0.08 | 0.07 | - | - | - | - | - |
| Feed Amount Of Ti | 1st stage reactor | 1.3 | 1.0 | 0.8 | 1.6 | 0.8 | 0.7 | 1.5 | 1.2 | 1.5 |
| | 2nd stage reactor | 9.0 | 8.0 | 3.0 | 8.0 | 8.0 | 8.0 | - | - | - |
| Al/Ti Ratio | | 60 | 60 | 60 | 60 | 60 | 60 | 60 | 80 | 60 |
| B/Ti Ratio | | 3 | 3 | 3 | 3 | 3 | 3 | 3 | 3 | 3 |
| Amount of hydrogen fed into 2nd stage reactor (ppm) | | 4 | 3 | 0 | 0 | 0 | 0 | 0 | 0 | 0 |
| Reaction temperature | 1st stage reactor | 110 | 110 | 102 | 110 | 110 | 111 | 93 | 85 | 118 |
| | 2nd stage reactor | 169 | 171 | 160 | 171 | 159 | 159 | - | - | - |
| Polymer from 1st stage reactor | MI | 0.09 | 0.03 | 0.07 | 0.04 | 0.07 | 0.04 | 1.3 | 6.0 | 0.9 |
| | Density | 0.902 | 0.908 | 0.906 | 0.905 | 0.910 | 0.909 | 0.888 | 0.875 | 0.902 |
| Final ethylene copolymer | MI | 1.0 | 0.6 | 1.0 | 0.9 | 1.4 | 1.3 | 1.3 | 6.0 | 0.9 |
| | Density | 0.917 | 0.917 | 0.917 | 0.917 | 0.917 | 0.917 | 0.888 | 0.875 | 0.902 |
| GPC of final ethylene copolymer | Number average molecular weight | 39,600 | 34,800 | 35,700 | 28,800 | 32,000 | 27,300 | 45,300 | 34,000 | 44,300 |
| | Weight average molecular weight | 100,700 | 115,400 | 98,900 | 101,800 | 96,200 | 97,100 | 98,300 | 71,500 | 103,300 |
| | Molecular Weight Distribution Index | 2.54 | 3.32 | 2.77 | 3.54 | 3.01 | 3.54 | 2.17 | 2.10 | 2.32 |

- Fed ratio of ethylene = first stage reactor : second stage reactor
- Ti represents Ti in single activation point catalyst. In other words, that is bis(2-phenylphenoxy)(pentamethylcyclopentadienyl)titanium (IV) chloride.
- Al represents a triisobutylaluminum as cocatalyst.
- B represents triphenylmethyliniumtetrakispentafluorophenyl borate as cocatalyst.

Table 2

[Table 2]

| | | Example 7 | Example 8 | Example 9 | Example 10 | Example 11 | Example 12 | Example 13 | Example 14 |
|---|---|---|---|---|---|---|---|---|---|
| Total flow of Solution(kg/h) | | 10 | 10 | 10 | 10 | 10 | 10 | 10 | 10 |
| Feed ratio of Ethylene (1st stage:2nd stage) | | 3.5:6.5 | 4:6 | 4.4:5.5 | 4.5:5.5 | 4.5:5.5 | 4:6 | 4:6 | 4:6 |
| Feed Ratio Of 1-octene To Ethylene | 1st stage reactor | 0.30 | 0.30 | 0.30 | 0.33 | 0.35 | 0.45 | 0.39 | 0.39 |
| | 2nd stage reactor | 0.04 | 0.00 | 0.10 | 0.09 | 0.05 | 0.00 | 0.00 | 0.00 |
| Feed Amount Of Ti | 1st stage reactor | 0.3 | 0.7 | 0.30 | 0.3 | 0.3 | 0.4 | 0.5 | 0.5 |
| | 2nd stage reactor | 2.3 | 6.5 | 3.7 | 4.0 | 4.0 | 4.0 | 2.5 | 2.5 |
| Al/Ti Ratio | | 60 | 60 | 60 | 60 | 60 | 60 | 60 | 60 |
| B/Ti Ratio | | 3 | 3 | 3 | 3 | 3 | 3 | 3 | 3 |
| Amount of hydrogen fed into 2nd stage reactor (ppm) | | 0 | 0 | 10 | 10 | 9 | 3 | 0 | 1 |
| Reaction temperature | 1st stage reactor | 98 | 120 | 114 | 113 | 107 | 110 | 110 | 97 |
| | 2nd stage reactor | 152 | 157 | 154 | 157 | 157 | 159 | 153 | 154 |
| Polymer from 1st stage reactor | MI | 0.14 | 0.12 | 0.10 | 0.05 | 0.05 | 0.05 | 0.05 | 0.07 |
| | Density | 0.909 | 0.904 | 0.910 | 0.912 | 0.907 | 0.901 | 0.899 | 0.899 |
| Final ethylene copolymer | MI | 0.8 | 0.9 | 1.0 | 1.1 | 1.1 | 1.2 | 1.1 | 0.8 |
| | Density | 0.915 | 0.917 | 0.914 | 0.917 | 0.916 | 0.914 | 0.915 | 0.915 |
| GPC of final ethylene copolymer | Number average molecular weight | 41,700 | 40,000 | 35,700 | 27,600 | 29,400 | 28,600 | 30,800 | 33,600 |
| | Weight average molecular weight | 102,100 | 101,300 | 100,200 | 97,100 | 98,200 | 97,200 | 98,800 | 102,500 |
| | Molecular Weight Distribution Index | 2.45 | 2.53 | 2.81 | 3.52 | 3.34 | 3.40 | 3.21 | 3.05 |

- Fed ratio of ethylene = first stage reactor : second stage reactor
- Ti represents Ti in single activation point catalyst.
- Al represents a triisobutylaluminum as cocatalyst.
- B represents triphenylmethyliniumtetrakispentafluorophenyl borate as cocatalyst.

Table 3

[Table 3]

| | | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|
| Final ethylene copolymer | MI | 0.9 | 1.0 | 1.1 | 1.1 | 5.3 | 1.0 | 0.9 |
| | Density | 0.920 | 0.915 | 0.917 | 0.883 | 0.872 | 0.902 | 0.919 |
| GPC of final ethylene copolymer | Number average molecular weight | 28,900 | 29,000 | 26,800 | 50,300 | 36,000 | 51,900 | 28,400 |
| | Weight average molecular weight | 114,300 | 110,300 | 108,000 | 98,800 | 77,600 | 107,800 | 112,200 |
| | Molecular Weight Distribution Index | 4.10 | 3.81 | 3.85 | 1.96 | 2.16 | 2.08 | 3.95 |

Table 4

[Table 4]

| | Content of Extract (wt.%) | Haze (%) | Falling Dart Impact strength (g) | Resin pressure inside cylinder($kg/cm^2$) | Activation energy for flow, Ea (kJ/mol) |
|---|---|---|---|---|---|
| Example 1 | 0.7 | 3.2 | 950 | 119 | 44.1 |
| Example 2 | 0.6 | 3.2 | 1010 | 118 | 50.1 |
| Example 3 | 0.8 | 3.9 | 210 | 117 | 46.1 |
| Example 4 | 0.4 | 4.7 | 230 | 108 | 53.2 |
| Example 5 | 0.7 | 4.1 | 930 | 126 | 44.7 |
| Example 6 | 0.7 | 4.3 | 920 | 113 | 49.7 |
| Example 7 | 0.4 | 3.9 | 870 | 124 | 42.4 |
| Example 8 | 1.5 | 4.7 | 850 | 123 | 44.2 |
| Example 9 | 1.2 | 3.5 | 930 | 114 | 45.9 |
| Example 10 | 2.0 | 6.4 | 970 | 108 | 48.3 |
| Example 11 | 1.2 | 4.2 | 930 | 107 | 49.7 |
| Example 12 | 1.0 | 5.4 | 1130 | 106 | 50.4 |
| Example 13 | 2.0 | 5.3 | 840 | 109 | 45.5 |
| Example 14 | 1.7 | 3.9 | 820 | 115 | 43.5 |
| Comparative Example 4 | 4.5 | 17.0 | 150 | 157 | 29.7 |
| Comparative Example 5 | 1.5 | 11.0 | 730 | 133 | 38.7 |
| Comparative Example 6 | 2.0 | 7.0 | 900 | 130 | 36.6 |
| Comparative Example 10 | 4.0 | 20.0 | 250 | 160 | 31.3 |

Tables 1 and 2 show polymerization conditions and physical property results of the polymers according to the polymerization conditions in the examples 1 to 14 and comparative examples 1 to 3. Table 3 shows physical property results of the polymer in the comparative examples 4 to 10. Table 4 shows physical properties of films molded from examples 1 to 14 and comparative examples 4, 5, 5, and 10, which have similar MI values and densities, and measurement results on processing load (resin pressure inside cylinder, $kg/cm^2$) at the time of molding films. It was found that, as compared with measurement results in the examples 3 and 4 in which 1-butene was used as comonomer and measurement results in the comparative example 4 in which 1-butene having similar MI value and density was used as comonomer, the copolymers of the example 3 and 4 have more excellent impact resistance and less processing load. The same comparison result was found in comparison between measurement results in the examples 1 and 2, and 5 to 14, in which 1-octene was used as comonomer and measurement results in the comparative example 10 in which 1-octene was used as comonomer. Also, it was found that the processing loads in the examples 1 and 2, and 5 to 14 were less than those in the comparative examples 5 and 6 in which commercial products prepared by using metallocene catalyst systems. Through comparison of physical property analysis, it was found that the processibility in each example was more excellent as compared with products having similar MI values and densities, and impact resistance in each example was also maintained to a level equal to or higher than the products having similar MI values and densities. It was found that measurement results on activation energy for flow in the examples 1 to 14 were all 40 kJ/ mol or more, which were higher than those in the comparative examples 4 to 6 and 10.

Figure 3 shows Van-Gurp Palmen analysis results of the examples of the present invention and the comparative examples using rheological physical property measurement results. Figure 3 shows that the examples 1 to 14 of the present invention exhibit different behavior from the comparative examples 1 to 10. In the comparative examples 1 to

10, as the oscillatory torque is increased, the phase angle is decreased and a degree at which the phase angle is decreased tends to be simultaneously increased. Whereas, in the examples 1 to 14, a degree at which the phase angle is decreased exhibits a different tendency at a section where an oscillatory torque section is 100 to 1,000μN.m, and the polymer satisfies the following equations 1 and 2 at a section where an oscillatory torque is 60 to 6,000μN.m. These different rheological behaviors in the examples 1 to 14 have relevance to excellent processibility and elasticity which are differentiated from those in the comparative examples.

[Equation 1]

$$P \leq 168.8 - 97.4 \times t + 32.2 \times t^2 - 4.0 \times t^3$$

[Equation 2]

$$P \geq 204.3 - 157.7 \times t + 58.0 \times t^2 - 7.5 \times t^3$$

[In equations 1 and 2, t is an oscillatory torque(μN.m), and P is a phase angle(°).]

## Claims

1. An ethylene copolymer obtained by polymerization of ethylene and a $C_3$-$C_{18}$ α-olefin comonomer, wherein the ethylene copolymer is prepared by performing a method comprising (a) preparing a first copolymer having a density of 0.860 to 0.940 g/cm$^3$ and a melt index (MI) of 0.001 to 2.0 g/10min; and (b) preparing the ethylene copolymer having a density of 0.910 to 0.960 g/cm$^3$ and a melt index (MI) of 0.5 to 20 g/10min by using the first copolymer from the step (a), wherein the steps (a) and (b) are carried out using a catalyst composition including a transition metal catalyst represented by chemical formula 1 below:

[Chemical Formula 1]

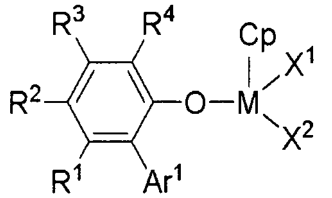

in Chemical Formula 1, M is a transition metal of group 4 on the periodic table of elements;
$C_p$ is a cyclopentadienyl ring which is $\eta^5$-linkable to the core metal M, or a fused ring containing a cyclopentadienyl ring, wherein the cyclopentadienyl ring or the fused ring containing a cyclopentadienyl ring may be further substituted with one or more substituents selected from ($C_1$-$C_{20}$)alkyl, ($C_6$-$C_{30}$)aryl, ($C_2$-$C_{20}$)alkenyl, and ($C_6$-$C_{30}$)ar($C_1$-$C_{20}$)alkyl;
$R^1$ through $R^4$ each are independently a hydrogen atom, a halogen atom, ($C_1$-$C_{20}$)alkyl, ($C_3$-$C_{20}$)cycloalkyl, ($C_6$-$C_{30}$)aryl, ($C_6$-$C_{30}$)ar($C_1$-$C_{10}$)alkyl, ($C_1$-$C_{20}$)alkoxy, ($C_3$-$C_{20}$)alkylsiloxy, ($C_6$-$C_{30}$)arylsiloxy, ($C_1$-$C_{20}$)alkylamino, ($C_6$-$C_{30}$)arylamino, ($C_1$-$C_{20}$)alkylthio, ($C_6$-$C_{30}$)arylthio or nitro, or $R^1$ through $R^4$ each may be linked to an adjacent substituent via ($C_3$-$C_{12}$)alkylene or ($C_3$-$C_{12}$) alkenylene with or without containing a fused ring, to form an alicyclic ring, or a monocyclic or polycyclic aromatic ring;
$Ar^1$ is ($C_6$-$C_{30}$)aryl or ($C_3$-$C_{30}$)heteroaryl containing one or more selected from N, O and S;
$X^1$ and $X^2$ each are independently a halogen atom, ($C_1$-$C_{20}$)alkyl, ($C_3$-$C_{20}$)cycloalkyl, ($C_6$-$C_{30}$)ar($C_1$-$C_{20}$)alkyl, ($C_1$-$C_{20}$)alkoxy, ($C_3$-$C_{20}$)alkylsiloxy, ($C_6$-$C_{30}$)arylsiloxy, ($C_1$-$C_{20}$)alkylamino, ($C_6$-$C_{30}$)arylamino, ($C_1$-$C_{20}$)alkylthio, ($C_6$-$C_{30}$)arylthio, or

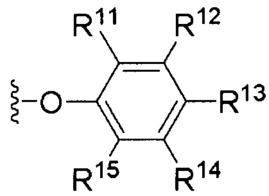

$R^{11}$ through $R^{15}$ each are independently a hydrogen atom, a halogen atom, $(C_1\text{-}C_{20})$alkyl, $(C_3\text{-}C_{20})$cycloalkyl, $(C_6\text{-}C_{30})$aryl, $(C_6\text{-}C_{30})$ar$(C_1\text{-}C_{10})$alkyl, $(C_1\text{-}C_{20})$alkoxy, $(C_3\text{-}C_{20})$alkylsiloxy, $(C_6\text{-}C_{30})$arylsiloxy, $(C_1\text{-}C_{20})$alkylamino, $(C_6\text{-}C_{30})$arylamino, $(C_1\text{-}C_{20})$alkylthio, $(C_6\text{-}C_{30})$arylthio or nitro, or $R^{11}$ through $R^{15}$ each may be linked to an adjacent substituent via $(C_3\text{-}C_{12})$alkylene or $(C_3\text{-}C_{12})$ alkenylene with or without containing a fused ring to form an alicyclic ring, or a monocyclic or polycyclic aromatic ring; and
alkyl, aryl, cycloalkyl, aralkyl, alkoxy, alkylsiloxy, arylsiloxy, alkylamino, arylamino, alkylthio or arylthio of $R^1$ through $R^4$, $R^{11}$ through $R^{15}$, and $X^1$ and $X^2$; the ring formed by linkage of $R^1$ through $R^4$ each or $R^{11}$ through $R^{15}$ each to an adjacent substituent via alkylene or alkenylene; and aryl or heteroaryl of $Ar^1$ may be further substituted with one or more substituents selected from a halogen atom, $(C_1\text{-}C_{20})$alkyl, $(C_3\text{-}C_{20})$cycloalkyl, $(C_6\text{-}C_{30})$aryl, $(C_6\text{-}C_{30})$ar$(C_1\text{-}C_{10})$alkyl, $(C_1\text{-}C_{20})$alkoxy, $(C_3\text{-}C_{20})$alkylsiloxy, $(C_6\text{-}C_{30})$arylsiloxy, $(C_1\text{-}C_{20})$alkylamino, $(C_6\text{-}C_{30})$arylamino, $(C_1\text{-}C_{20})$alkylthio, $(C_6\text{-}C_{30})$arylthio, nitro and hydroxyl,
wherein the ethylene copolymer has an activation energy of 40 kJ/mol or more and a molecular weight distribution (Mw/Mn) of 2.4 or more, and satisfies equations 1 and 2 below at a section where an oscillatory torque is 60 to 6,000 $\mu$N.m:

[Equation 1]

$$P \leq 168.8 - 97.4 \times t + 32.2 \times t^2 - 4.0 \times t^3$$

[Equation 2]

$$P \geq 204.3 - 157.7 \times t + 58.0 \times t^2 - 7.5 \times t^3$$

wherein the equations 1 and 2 above, t is an oscillatory torque ($\mu$N.m)and P is a phase angle (°), and
wherein a content of $C_3\text{-}C_{18}$ $\alpha$-olefin comonomer is 1 to 40% by weight.

**2.** The ethylene copolymer of claim 1, wherein the $C_3\text{-}C_{18}$ $\alpha$-olefin comonomer is one or more selected from the group consisting of propylene, 1-butene, 1-pentene, 4-methyl-1-pentene, 1-hexene, 1-octene, 1-decene, 1-dodecene, and a mixture thereof.

**3.** The ethylene copolymer of claim 1, wherein a content of $C_3\text{-}C_{18}$ $\alpha$-olefin comonomer is 1 to 30% by weight.

**4.** An injection molding product produced by using the ethylene copolymer of any preceding claim.

**5.** The injection molding product of claim 4, which is a mono-layered film, a multi-layered film, a compound product, a sheet product, a pipe product, or a blow molding product.

## Patentansprüche

**1.** Durch Polymerisation von Ethylen und einem $C_3\text{-}C_{18}$ $\alpha$-Olefin-Comonomer erhaltenes Ethylen-Copolymer,
wobei das Ethylen-Copolymer durch Ausführen eines Verfahrens erzeugt wird, welches umfasst: (a) Herstellen eines ersten Copolymers mit einer Dichte von 0,860 bis 0,940 g/cm$^3$ und einem Schmelzindex (MI) von 0,001 bis 2,0 g/10 min.; und (b) Herstellen des Ethylen-Copolymers mit einer Dichte von 0,910 bis 0,960 g/cm$^3$ und einem Schmelzindex (MI) von 0,5 bis 20 g/10 min. unter Verwenden des ersten Copolymers aus dem Schritt (a), wobei die Schritte (a) und (b) unter Verwenden einer Katalysatorzusammensetzung ausgeführt werden, die einen durch die nachstehende chemische Formel 1 dargestellten Übergangsmetallkatalysator umfassen:

[chemische Formel 1]

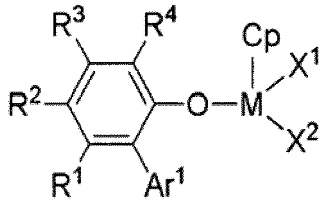

wobei in der chemischen Formel 1 M ein Übergangsmetall der Gruppe 4 der Periodentafel der Elemente ist; $C_p$ ein Cyclopentadienylring, der mit dem Kernmetall M $\eta^5$-verknüpfbar ist, oder ein kondensierter Ring, der einen Cyclopentadienylring enthält, ist, wobei der Cyclopentadienylring oder der kondensierte Ring, der einen Cyclopentadienylring enthält, weiter mit einem oder mehreren Substituenten gewählt aus $(C_1-C_{20})$Alkyl, $(C_6-C_{30})$Aryl, $(C_2-C_{20})$Alkenyl und $(C_6-C_{30})$Ar$(C_1-C_{20})$alkyl substituiert sein kann;

$R^1$ bis $R^4$ jeweils unabhängig ein Wasserstoffatom, ein Halogenatom, $(C_1-C_{20})$Alkyl, $(C_3-C_{20})$Cycloalkyl, $(C_6-C_{30})$Aryl, $(C_6-C_{30})$Ar$(C_1-C_{10})$alkyl, $(C_1-C_{20})$Alkoxy, $(C_3-C_{20})$Alkylsiloxy, $(C_6-C_{30})$Arylsiloxy, $(C_1-C_{20})$Alkylamino, $(C_6-C_{30})$Arylamino, $(C_1-C_{20})$Alkylthio, $(C_6-C_{30})$Arylthio oder Nitro sind oder $R^1$ bis $R^4$ jeweils mit einem benachbarten Substituenten mittels $(C_3-C_{12})$Alkylen oder $(C_3-C_{12})$Alkenylen mit oder ohne Enthalten eines kondensierten Rings verknüpft sein können, um einen alizyklischen Ring oder einen monozyklischen oder polyzyklischen aromatischen Ring zu bilden;

$Ar^1$ $(C_6-C_{30})$Aryl oder $(C_3-C_{30})$Heteroaryl ist, das ein oder mehrere gewählt aus N, O und S enthält;

$X^1$ und $X^2$ jeweils unabhängig ein Halogenatom, $(C_1-C_{20})$Alkyl, $(C_3-C_{20})$Cycloalkyl, $(C_6-C_{30})$Ar$(C_1-C_{20})$alkyl, $(C_1-C_{20})$Alkoxy, $(C_3-C_{20})$Alkylsiloxy, $(C_6-C_{30})$Arylsiloxy, $(C_1-C_{20})$Alkylamino, $(C_6-C_{30})$Arylamino, $(C_1-C_{20})$Alkylthio, $(C_6-C_{30})$Arylthio sind oder

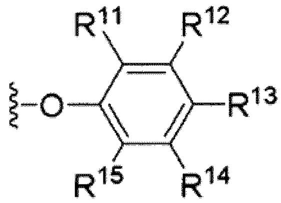

$R^{11}$ bis $R^{15}$ jeweils unabhängig ein Wasserstoffatom, ein Halogenatom, $(C_1-C_{20})$Alkyl, $(C_3-C_{20})$Cycloalkyl, $(C_6-C_{30})$Aryl, $(C_6-C_{30})$Ar$(C_1-C_{10})$alkyl, $(C_1-C_{20})$Alkoxy, $(C_3-C_{20})$Alkylsiloxy, $(C_6-C_{30})$Arylsiloxy, $(C_1-C_{20})$Alkylamino, $(C_6-C_{30})$Arylamino, $(C_1-C_{20})$Alkylthio, $(C_6-C_{30})$Arylthio oder Nitro sind oder $R^{11}$ bis $R^{15}$ jeweils mit einem benachbarten Substituenten mittels $(C_3-C_{12})$Alkylen oder $(C_3-C_{12})$Alkenylen mit oder ohne Enthalten eines kondensierten Rings verknüpft sein können, um einen alizyklischen Ring oder einen monozyklischen oder polyzyklischen aromatischen Ring zu bilden; und

Alkyl, Aryl, Cycloalkyl, Aralkyl, Alkoxy, Alkylsiloxy, Arylsiloxy, Alkylamino, Arylamino, Alkylthio oder Arylthio von $R^1$ bis $R^4$, $R^{11}$ bis $R^{15}$ und $X^1$ und $X^2$; wobei der Ring durch Verknüpfen von jeweils $R^1$ bis $R^4$ oder jeweils $R^{11}$ bis $R^{15}$ mit einem benachbarten Substituenten mittels Alkylen oder Alkenylen gebildet ist; und Aryl oder Heteroaryl von $Ar^1$ weiter substituiert werden kann mit einem oder mehreren Substituenten gewählt aus einem Halogenatom, $(C_1-C_{20})$Alkyl, $(C_3-C_{20})$Cycloalkyl, $(C_6-C_{30})$Aryl, ($C_6$-C30)Ar$(C_1-C_{10})$alkyl, $(C_1-C_{20})$Alkoxy, $(C_3-C_{20})$Alkylsiloxy, $(C_6-C_{30})$Arylsiloxy, $(C_1-C_{20})$Alkylamino, $(C_6-C_{30})$Arylamino, $(C_1-C_{20})$Alkylthio, $(C_6-C_{30})$Arylthio, Nitro und Hydroxyl, wobei das Ethylen-Copolymer eine Aktivierungsenergie von 40 kJ/mol oder mehr und eine Molekülmassenverteilung (Mw/Mn) von 2,4 oder mehr aufweist und die nachstehenden Gleichungen 1 und 2 an einem Abschnitt erfüllt, in dem ein oszillatorisches Moment 60 bis 6.000 $\mu$N.m beträgt:

[Gleichung 1]

$$P \leq 168{,}8 - 97{,}4 \times t + 32{,}2 \times t^2 - 4{,}0 \times t^3$$

[Gleichung 2]

$$P \geq 204,3 - 157,7 \times t + 58,0 \times t^2 - 7,5 \times t^3$$

wobei in den vorstehenden Gleichungen 1 und 2 t ein oszillatorisches Moment (μN.m) ist und P ein Phasenwinkel (°C) ist und
wobei ein Anteil von $C_3$-$C_{18}$-α-Olefin-Comonomer 1 bis 40 Gew.-% beträgt.

**2.** Ethylen-Copolymer nach Anspruch 1, wobei
das $C_3$-$C_{18}$-α-Olefin-Comonomer eines oder mehrere gewählt aus der Gruppe bestehend aus Propylen, 1-Buten, 1-Penten, 4-Methyl-1-penten, 1-Hexen, 1-Octen, 1-Decen, 1-Dodecen und eine Mischung derselben ist.

**3.** Ethylen-Copolymer nach Anspruch 1, wobei
ein Anteil von $C_3$-$C_{18}$-α-Olefin-Comonomer 1 bis 30 Gew.-% beträgt.

**4.** Spritzgussformprodukt, hergestellt durch Verwenden des Ethylen-Copolymers nach einem vorhergehenden Anspruch.

**5.** Spritzgussformprodukt nach Anspruch 4, welches eine monolagige Folie, eine mehrlagige Folie, ein Verbundprodukt, ein Plattenprodukt, ein Rohrprodukt oder ein Blasformprodukt ist.

**Revendications**

**1.** Copolymère d'éthylène obtenu par polymérisation d'éthylène et d'un monomère α-oléfinique en $C_3$ à $C_{18}$,
le copolymère d'éthylène étant préparé en exécutant un procédé comprenant (a) la préparation d'un premier copolymère ayant une masse volumique de 0,860 à 0,940 g/cm$^3$ et un indice de fluidité à chaud (MI) de 0,001 à 2,0 g/10 min ; et (b) la préparation du copolymère d'éthylène ayant une masse volumique de 0,910 à 0,960 g/cm$^3$ et un indice de fluidité à chaud (MI) de 0,5 à 20 g/10 min en utilisant le copolymère de l'étape (a), les étapes (a) et (b) étant effectuées en utilisant une composition de catalyseur comprenant un catalyseur à base de métal de transition représenté par la formule chimique 1 ci-dessous :

[Formule chimique 1]

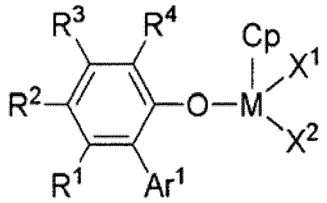

dans la formule chimique 1, M est un métal de transition du groupe 4 de la classification périodique des éléments ;
$C_p$ est un cycle cyclopentadiényle qui peut être lié par $\eta^5$ au métal central M, ou un cycle fusionné contenant un cycle cyclopentadiényle, le cycle cyclopentadiényle ou le cycle fusionné contenant un cycle cyclopentadiényle pouvant être en outre substitué par un ou plusieurs substituants choisis parmi un ($C_1$-$C_{20}$)alkyle, ($C_6$-$C_{30}$)aryle, ($C_2$-$C_{20}$)alcényle et ($C_6$-$C_{30}$)ar($C_1$-$C_{20}$)alkyle ;
$R^1$ à $R^4$ sont chacun indépendamment un atome d'hydrogène, un atome d'halogène, un ($C_1$-$C_{20}$)alkyle, ($C_3$-$C_{20}$)cycloalkyle, ($C_6$-$C_{30}$)aryle, ($C_6$-$C_{30}$)ar($C_1$-$C_{10}$)alkyle, ($C_1$-$C_{20}$)alcoxy, ($C_3$-$C_{20}$)alkylsiloxy, ($C_6$-$C_{30}$)arylsiloxy, ($C_1$-$C_{20}$)alkylamino, ($C_6$-$C_{30}$)arylamino, ($C_1$-$C_{20}$)alkylthio, ($C_6$-$C_{30}$)arylthio ou un nitro, ou bien $R^1$ à $R^4$ peuvent chacun être liés à un substituant adjacent par l'intermédiaire d'un ($C_3$-$C_{12}$)alkylène ou d'un ($C_3$-$C_{12}$) alcénylène en contenant ou sans contenir de cycle fusionné, afin de former un cycle alicyclique, ou un cycle aromatique monocyclique ou polycyclique ;
$Ar^1$ est un ($C_6$-$C_{30}$)aryle ou un ($C_3$-$C_{30}$)hétéroaryle contenant un ou plusieurs éléments choisis parmi N, O et S ;
$X^1$ et $X^2$ sont chacun indépendamment un atome d'halogène, un ($C_1$-$C_{20}$)alkyle, ($C_3$-$C_{20}$)cycloalkyle, ($C_6$-$C_{30}$)ar($C_1$-$C_{20}$)alkyle, ($C_1$-$C_{20}$)alcoxy, ($C_3$-$C_{20}$)alkylsiloxy, ($C_6$-$C_{30}$)arylsiloxy, ($C_1$-$C_{20}$)alkylamino,

$(C_6\text{-}C_{30})$arylamino, $(C_1\text{-}C_{20})$alkylthio, $(C_6\text{-}C_{30})$arylthio, ou

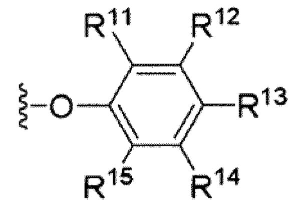

$R^{11}$ à $R^{15}$ sont chacun indépendamment un atome d'hydrogène, un atome d'halogène, un $(C_1\text{-}C_{20})$alkyle, $(C_3\text{-}C_{20})$cycloalkyle, $(C_6\text{-}C_{30})$aryle, $(C_6\text{-}C_{30})$ar$(C_1\text{-}C_{10})$alkyle, $(C_1\text{-}C_{20})$alcoxy, $(C_3\text{-}C_{20})$alkylsiloxy, $(C_6\text{-}C_{30})$arylsiloxy, $(C_1\text{-}C_{20})$alkylamino, $(C_6\text{-}C_{30})$arylamino, $(C_1\text{-}C_{20})$alkylthio, $(C_6\text{-}C_{30})$arylthio ou un nitro, ou bien $R^{11}$ à $R^{15}$ peuvent chacun être liés à un substituant adjacent par l'intermédiaire d'un $(C_3\text{-}C_{12})$alkylène ou d'un $(C_3\text{-}C_{12})$ alcénylène en contenant ou sans contenir de cycle fusionné afin de former un cycle alicyclique, ou un cycle aromatique monocyclique ou polycyclique ; et

l'alkyle, aryle, cycloalkyle, aralkyle, alcoxy, alkylsiloxy, arylsiloxy, alkylamino, arylamino, alkylthio ou arylthio de $R^1$ à $R^4$, $R^{11}$ à $R^{15}$, et $X^1$ et $X^2$ ; le cycle formé par liaison de chacun parmi $R^1$ à $R^4$ ou $R^{11}$ à $R^{15}$ à un substituant adjacent par l'intermédiaire d'un alkylène ou d'un alcénylène ; et l'aryle ou l'hétéroaryle de $Ar^1$ peuvent en outre être substitués par un ou plusieurs substituants choisis parmi un atome d'halogène, un $(C_1\text{-}C_{20})$alkyle, $(C_3\text{-}C_{20})$cycloalkyle, $(C_6\text{-}C_{30})$aryle, $(C_6\text{-}C_{30})$ar$(C_1\text{-}C_{10})$alkyle, $(C_1\text{-}C_{20})$alcoxy, $(C_3\text{-}C_{20})$alkylsiloxy, $(C_6\text{-}C_{30})$arylsiloxy, $(C_1\text{-}C_{20})$alkylamino, $(C_6\text{-}C_{30})$arylamino, $(C_1\text{-}C_{20})$alkylthio, $(C_6\text{-}C_{30})$arylthio, un nitro et un hydroxyle,

le copolymère d'éthylène ayant une énergie d'activation de 40 kJ/mol ou plus et une distribution de masse moléculaire (Mw/Mn) de 2,4 ou plus, et satisfaisant aux équations 1 et 2 ci-dessous au niveau d'une section où un couple d'oscillation vaut de 60 à 6 000 μN.m :

[Équation 1]

$$P \leq 168{,}8 - 97{,}4 \times t + 32{,}2 \times t^2 - 4{,}0 \times t^3$$

[Équation 2]

$$P \geq 204{,}3 - 157{,}7 \times t + 58{,}0 \times t^2 - 7{,}5 \times t^3$$

où, dans les équations 1 et 2 ci-dessus, t est un couple d'oscillation (μN.m) et P est un angle de phase (°), et où une teneur en monomère α-oléfinique en $C_3$ à $C_{18}$ va de 1 à 40 % en poids.

**2.** Copolymère d'éthylène selon la revendication 1, dans lequel le monomère α-oléfinique en $C_3$ à $C_{18}$ est un ou plusieurs monomères choisis dans le groupe constitué de propylène, 1-butène, 1-pentène, 4-méthyl-1-pentène, 1-hexène, 1-octène, 1-décène, 1-dodécène et un mélange de ceux-ci.

**3.** Copolymère d'éthylène selon la revendication 1, dans lequel une teneur en monomère α-oléfinique en $C_3$ à $C_{18}$ va de 1 à 30 % en poids.

**4.** Produit moulé par injection fabriqué en utilisant le copolymère d'éthylène selon une quelconque revendication précédente.

**5.** Produit moulé par injection selon la revendication 4, qui est un film monocouche, un film multicouche, un produit composé, un produit en feuille, un produit tubulaire, ou un produit moulé par soufflage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 0262024
- US 2010113720 A1
- KR 102010031461 A
- US 5198401 A


### Non-patent literature cited in the description


- **VAN GURP.** *Rheology Bulletin,* 1998, vol. 67, 5-8
- **B. HAGSROEM.** *Conference on Polymer Processing,* 1977